# EUROPÄISCHE PATENTANMELDUNG

(11) **EP 2 098 341 A1**
(43) Veröffentlichungstag der Anmeldung: **09.09.2009**
(21) Anmeldenummer: 09405017.6
(22) Anmeldetag: 28.01.2009
(51) Int. Cl.: B26B 25/00, A22B 5/16

(54) **Vorrichtung zum Zerlegen, Ausbeinen und Entfetten Schlachttieren**

(30) Priorität: 04.03.2008 CH 3152008
(71) Anmelder: Suhner Inter-Trade AG, 6341 Baar (CH)
(72) Erfinder: Lüthi, Paul, Rome, GA 30161 (US); Isenschmid, Hans, 5107 Schinznach-Dorf (CH)
(74) Vertreter: Gachnang, Hans Rudolf

(57) **Zusammenfassung**

Die Vorrichtung (1) zum Zerlegen, Ausbeinen und Entfetten von Schlachttieren umfasst einen Handgriff (3), an dessen vorderen Ende ein Kopfteil (9) befestigt ist. Das Kopfteil (9) trägt einen Messerträger (21) mit einem drehbar gelagerten ringförmigen Messer (17). Der Messerträger (21) ist mittels Führungsnocken (27), welche in Ausnehmungen (29) am Kopfteil (9) eingelassen sind, mit letzterem spielfrei verbindbar.

## Beschreibung

Gegenstand der Erfindung ist eine Vorrichtung zum Zerlegen, Ausbeinen und Entfetten von Schlachttieren gemäss Oberbegriff des Patentanspruchs 1.

Vorrichtungen der genannten Gattung sind auch unter dem Namen Trimmer bekannt. Sie umfassen einen Handgriff, welcher auch den Antriebsmotor aufnehmen kann, ein daran angeflanschtes Kopfteil, welches je nach Antriebsart des Motors ein Getriebe enthalten kann, und einen Messerträger, welcher vom Kopfteil abnehmbar ist, um das im Messerträger umlaufende ringförmige Messer periodisch schnell austauschen zu können. Die Verbindung zwischen dem Messerträger und dem Kopfteil erfolgt bei den bekannten Vorrichtungen mit zwei Schrauben, welche messerseitig in am Kopfteil ausgebildete Gewindebohrungen einschraubbar sind. Die Schraubenköpfe liegen dann auf einem vom Messerträger oben abstehenden Flansch und sind nur von dieser Seite durch Schraubendreher lös- und feststellbar. Im Messerträger sind dazu Bohrungen oder Schlitze angebracht, welche diesen auf den Schraubenschäften bezüglich des Kopfteils ausrichten. Diese Befestigungsart erfüllt zwar ihren Zweck, doch ist sie unbefriedigend, da einerseits keine genaue Positionierung des Messerträgers auf den Kopfteil mit geringem Aufwand möglich ist und andererseits im Bereich der Messerschneide hantiert werden muss (vergleiche US-A 4,637,140).

Eine Aufgabe der vorliegenden Erfindung besteht nun darin, eine Vorrichtung zu schaffen, bei der der Messerträger reproduzierbar präzise und schnell mit dem Kopfteil verbindbar und auf diesem klemm- und spannbar ist. Eine weitere Aufgabe der Erfindung ist die Schaffung einer Spannvorrichtung ausserhalb des Messers.

Gelöst wird diese Aufgabe durch eine Vorrichtung gemäss den Merkmalen des Patentanspruchs 1. Vorteilhafte Ausgestaltungen der Vorrichtung sind in den abhängigen Ansprüchen näher umschrieben.

Es gelingt durch die steckbare Verbindung zwischen Messerträger und Kopfteil und durch die geeignete Ausbildung des mindestens einen Führungsnockens den Messerträger stets exakt positioniert am Kopfteil zu befestigen. Die Verrastung kann durch eine Schraube oder ein anderes, eine Spannkraft auf den Messerträger auswirkendes Haltemittel erfolgen.

Anhand eines illustrierten Ausführungsbeispiels wird die Erfindung näher erläutert. Es zeigen
- Figur 1: eine perspektivische Darstellung der Vorrichtung von unten,
- Figur 2: eine Seitenansicht der Vorrichtung in Figur 1,
- Figur 3: einen Aufsicht auf die Vorrichtung in Figur 1,
- Figur 4: eine Explosionsdarstellung der wesentlichen Einzelteile der Vorrichtung,
- Figur 5: ein vergrössert dargestellter Querschnitt durch den Messerträger und den Kopfteil der Vorrichtung (Bereich C),
- Figur 6: eine Seitenansicht der Vorrichtung, Kopfteil teilweise aufgeschnitten,
- Figur 7: eine Ansicht der Vorrichtung von unten.

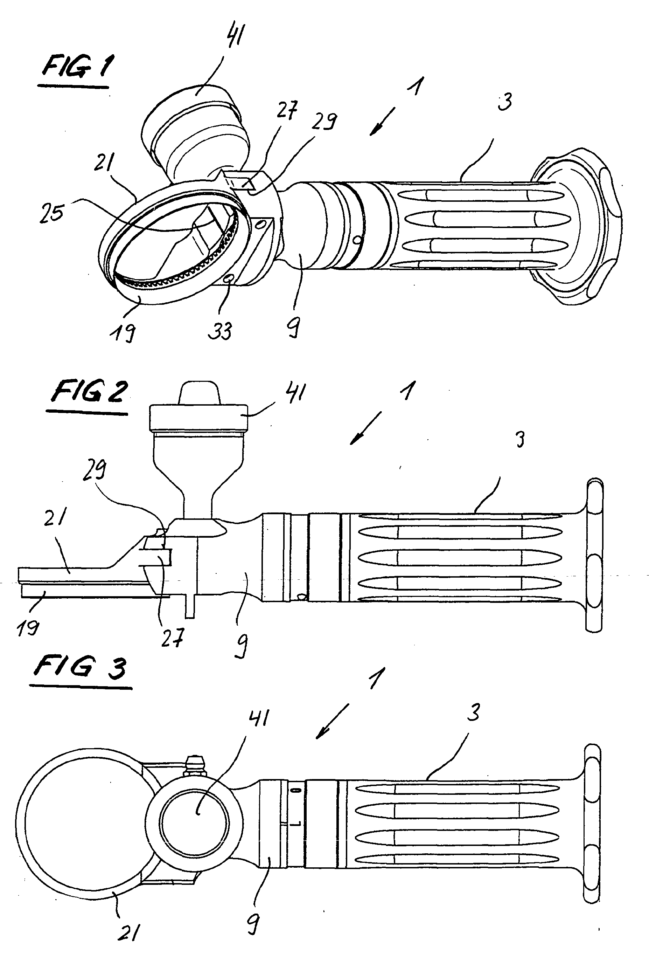

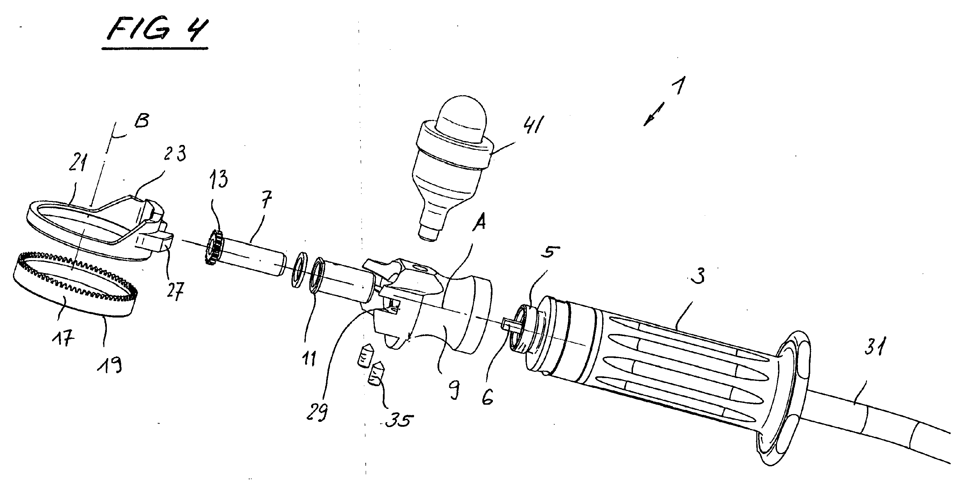

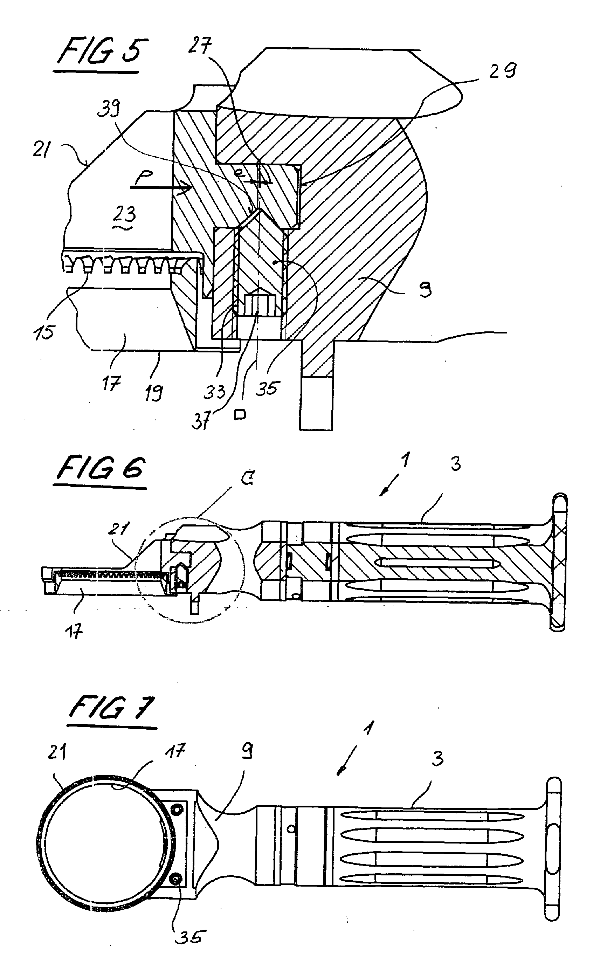

Mit Bezugszeichen 1 ist in den Figuren 1 bis 4 eine Vorrichtung zum Zerlegen, Ausbeinen und Entfetten von Schlachttieren dargestellt. Diese umfasst, von rechts beginnend, einen Handgriff 3, an welchem die Vorrichtung 1 vom Arbeiter gehalten wird. Im Handgriff 3 ist ein Antrieb eingesetzt (z.B. Elektromotor, Druckluftmotor) oder er nimmt das Ende einer nicht dargestellten flexiblen Welle auf, welche mit einem externen, ebenfalls nicht dargestellten Elektromotor, verbunden ist. Am vorderen Ende des Handgriffs 3 ist eine Abtriebswelle 6 dargestellt, in welcher eine Ritzelwelle 7 aufschieb- und einkuppelbar ist. Die Ritzelwelle 7 ist in einem Kopfteil 9 in einer Büchse 11 drehbar gelagert. Am vorderen Ende der Ritzelwelle 7 sitzt ein Zahnritzel 13. Das Zahnritzel 13 gelangt in Eingriff mit den Zähnen 15 an der Oberkante eines ringförmigen Messers 17. Gegenüber den Zähnen 15 ist am Messer 17 eine kreisförmige Schneide 19 ausgebildet. Das Messer 17 wird von einem Messerträger 21 drehbar gehalten. Zu diesem Zweck ist der Messerträger 21 im Bereich eines hochgezogenen zylindrischen Flansches 23 geschlitzt. D.h. der kreisringförmig ausgebildete Vorderteil des Messerträgers 21 ist im Bereich des Flansches 23 durch einen Schlitz 25 geteilt. Der Schlitz 25 ermöglicht es, zum Austausch des rotierend gehaltenen Messers 19 den Messerträger 21 etwas zu spreizen. Am Flansch 23 ist auf dessen Peripherie ein Führungsnocken 27 angeformt. Der Querschnitt des mindestens einen Führungsnockens 27 ist vorzugsweise mehreckig, beispielsweise rechteckig; er könnte auch oval sein (Fig. 5).

Am Kopfteil 9 ist als Aufnahme für den mindestens einen Führungsnocken 27, vorzugsweise aber zwei Führungsnocken 27, eine kongruente Ausnehmung 29, z.B. in Gestalt eines horizontalen Schlitzes im Kopfteil 9, ausgebildet. Die beiden seitlich des Kopfteils 9 eingelassenen Ausnehmungen 29 führen die beiden Führungsnocken 27 in horizontaler und vertikaler Richtung und positionieren diese so, dass beim Einschieben der Führungsnocken 27 in die in engen Toleranzen hergestellten Ausnehmungen 29 die Drehachse A der Ritzelwelle 7 sich mit der Drehachse B des Messers 17 exakt in einem Punkt schneidet.

Im Kopfteil 9 sind rechtwinklig zu den oberen und unteren Begrenzungsflächen an der Ausnehmung 29 Gewindebohrungen 33 eingelassen. Diese dienen der Aufnahme von Schrauben 35, deren vorderes Ende konusförmig ausgebildet ist und welche beispielsweise hinten einen Innensechskant 37 aufweisen. Als Gegenstück zum konischen Ende der Schrauben 35 sind an den Führungsnocken 27 konische Bohrungen 39 eingelassen oder eine geneigt zur Horizontalen verlaufende Anschrägung in Gestalt einer v-förmigen Nut angebracht und zwar derart, dass bei vollständig in die Ausnehmungen 29 eingeschobenen Führungsnocken 27 die Drehachse D der Schraube 35 in einem Abstand e von der Symmetrieachse der konischen Bohrung 39 liegt oder bei einer Anschrägung diese schneidet. Dies ermöglicht es, beim Eindrehen der Schrauben 35 in die Gewindebohrung 33 den Messerträger 21 in Richtung des Pfeils P zu schieben und damit spielfrei in der Ausnehmung 29 festzuspannen. Kleine Toleranzfehler bei der Herstellung - sowohl des Kopfteils 9 als auch des Messerträgers 21 - werden dadurch kompensiert. Es ist jederzeit eine spielfreie Montage des Messerträgers 21 möglich. Die Bedienungsperson hat beim Messerwechsel folglich nur die Schrauben 35 teilweise herauszudrehen, den Messerträger 21 abzuziehen und nach dem Messerwechsel in umgekehrter Reihenfolge vorzugehen.

In den Figuren ist zudem eine Fettdose 41 zum Fetten des rotierenden Messers 19 im Messerträger 21 dargestellt.

## Patentansprüche

1. Vorrichtung (1) zum Zerlegen, Ausbeinen und Entfetten von Schlachttieren, umfassend einen Antriebsteil mit einem an dessen Abtriebswelle (6) angeflanschten Kopfteil (9), an dem ein Messerträger (21) für ein umlaufendes zylinderringförmiges Messer (17) mit Verbindungsmitteln austauschbar gehalten ist, **dadurch gekennzeichnet,**
als Verbindungsmittel am Messerträger (21) mindestens ein Führungsnocken (27) ausgebildet ist, welcher in eine Ausnehmung (29) am Kopfteil (9) einschiebbar und dort mit Spannmitteln (35) verspannbar ist.

2. Vorrichtung nach Anspruch 1, **dadurch gekennzeichnet, dass** der mindestens eine Führungsnocken (27) einen mehreckigen oder runden Querschnitt aufweist und dass die Ausnehmung (29) einem zum Führungsnocken (27) kongruenten Querschnitt aufweist.

3. Vorrichtung nach einem der Ansprüche 1 oder 2, **dadurch gekennzeichnet, dass** an dem mindestens einen Führungsnocken (27) eine konische Bohrung (39) eingelassen ist oder dass am Führungsnocken (27) eine v-förmige Nut eingelassen ist.

4. Vorrichtung nach Anspruch 3, **dadurch gekennzeichnet, dass** die Symmetrieachse (D) der konischen Bohrung (39) exzentrisch zu einer Gewindebohrung (33) im Kopfteil (9) liegt.

5. Vorrichtung nach Anspruch 4, **dadurch gekennzeichnet, dass** die Gewindebohrung (33) im Kopfteil (9) in die Ausnehmung (29) mündet.
